# EUROPÄISCHE PATENTANMELDUNG

(11) **EP 3 482 817 A1**
(43) Veröffentlichungstag der Anmeldung: **15.05.2019**
(21) Anmeldenummer: 17200834.4
(22) Anmeldetag: 09.11.2017
(51) Int. Cl.: B01D 63/02

(54) **MEMBRANBÜNDELAUFMACHUNG MIT ABSTANDSHALTERN**

(71) Anmelder: Wiese, Frank, 42389 Wuppertal (DE)
(72) Erfinder: Wiese, Frank, 42389 Wuppertal (DE)

(57) **Zusammenfassung**

Hohlfasermembranbündel mit einer Längserstreckung, einem Membranbündelquerschnitt und einem ersten und einem zweiten Bündelende, umfassend eine Vielzahl von sich zwischen dem ersten und dem zweiten Bündelende erstreckenden Hohlfasermembranen sowie auf den Membranbündelquerschnitt bezogen einen Anteil von zwischen den Hohlfasermembranen angeordneten Fäden, die die Hohlfasermembranen auf Abstand halten, dadurch gekennzeichnet, dass die Fäden kürzer als die Hohlfasermembranen sind, so dass mindestens am ersten Ende des Hohlfasermembranbündels Hohlfasermembranen gegenüber den Fäden überstehen und das Hohlfasermembranbündel in einem vom ersten Ende ausgehenden ersten Endbereich einen geringeren Anteil an Fäden aufweist als in einem zwischen dem ersten und dem zweiten Bündelende liegenden Bündelbereich mit maximalem Anteil an Fäden.

Membranmodul mit einem zylinderförmigen Gehäuse mit einer Längserstreckung und einem ersten und einem zweiten Gehäuseende, einem sich zwischen dem ersten und dem zweiten Gehäuseende erstreckenden Gehäusemantel sowie einer Gehäuseinnenwand, wobei im Gehäuse in Richtung der Längserstreckung des Gehäuses orientiertes ein solches Hohlfasermembranbündel angeordnet ist.

## Beschreibung

Die Erfindung betrifft ein Hohlfasermembranbündel mit einer Längserstreckung, einem Membranbündelquerschnitt und einem ersten und mit einem zweiten Bündelende, umfassend eine Vielzahl von sich zwischen dem ersten und dem zweiten Bündelende erstreckenden Hohlfasermembranen sowie auf den Membranbündelquerschnitt bezogen einen Anteil von zwischen den Hohlfasermembranen angeordneten Fäden, die die Hohlfasermembranen auf Abstand halten. Die Erfindung betrifft des Weiteren einen Membranmodul mit einem zylinderförmigen Gehäuse mit einer Längserstreckung, wobei im Gehäuse ein in Richtung der Längserstreckung des Gehäuses orientiertes Hohlfasermembranbündel angeordnet ist.

Hohlfasermembranbündel und Membranmodule, die in ihrem Gehäuse ein in Richtung der Längserstreckung des Gehäuses orientiertes Hohlfasermembranbündel aufweisen, werden vielfach in industriellen und medizinischen Bereichen wie z.B. der Filtration von fluiden Medien, zur Dialyse, zum Gasaustausch oder zur Gastrennung, in der Elektrodialyse, oder als Membranadsorber eingesetzt. Dabei kann das Hohlfasermembranbündel an einem oder an beiden Enden in einen Rohrboden oder eine Vergussmasse z.B. aus einem duromeren Harz eingebettet sein. Je nach Ausführungsform können dabei die Hohlfasermembranen des Bündels an beiden Enden offen sein und ihre Lumina damit für Fluide zugänglich sein. Derartige Membranmodule werden in der Regel im sogenannten Cross-Flow Modus betrieben. Die Hohlfasermembranen können aber auch an nur einem ihrer Enden offen sein und an ihrem anderen Ende geschlossen. Solche Membranmodule eignen sich für den Betrieb im sogenannten Dead-End Modus.

Durch die Einbettung der Hohlfasermembranenden kann der Innenhohlraum, d.h. können die Lumina der Hohlfasermembranen von dem die Hohlfasermembranen umgebenden Außenraum abgetrennt und Innenhohlraum und Außenraum können somit mit verschiedenen Fluiden, die z.B. zum Wärmeaustausch unterschiedliche Temperaturen bzw. zum Stoffaustausch unterschiedliche Konsistenz aufweisen können, beschickt werden. Wesentlich für die gute Wirksamkeit derartiger Hohlfasermembranbündel in der Anwendung ist zum einen die fluiddichte Einbettung der Hohlfasermembranenden und zum anderen eine gute und gleichmäßige Umströmbarkeit der Hohlfasermembranen. Hierzu ist es erforderlich, dass die Hohlfäden untereinander beabstandet sind, damit sie so eine möglichst große wirksame Oberfläche aufzuweisen.

Vielfach werden hierzu zwischen die Hohlfasermembranen des Bündels monofile oder multifile Fäden eingebracht und zusammen mit den Hohlfasermembranen bei der Herstellung der Membranmoduls eingebettet. Durch diese Abstandsfäden werden entlang des Membranbündels die Hohlfasermembranen gegeneinander auf Abstand gehalten, so dass diese an ihrer Außenseite gut umströmbar sind und dadurch z.B. eine Verbesserung des Stoffaustauschs erzielt werden kann.

Die Fäden können beispielsweise so im Membranbündel vorliegen, dass jeweils ein oder mehrere Hohlfäden mit mindestens einem Wickelfaden spiralförmig umwickelt werden. Die Wickelfäden wirken als Abstandhalter zwischen benachbarten Hohlfäden, wobei die Dicke der Wickelfäden den zwischen benachbarten Hohlfäden Strömungsquerschnitt bestimmt. Derartige Ausführungsformen von Membranbündeln werden beispielsweise in der US-A-4 066 553, der US-A-4 293 418, der US 2010/0035374 oder der WO 95/34373 offenbart.

In einer weiteren Ausführungsform sind zwischen die Hohlfasermembranen im Bündel monofile oder multifile Abstandsfäden eingebracht, die sich im Wesentlichen parallel zu den Hohlfasermembranen erstrecken und die zusammen mit den Hohlfasermembranen in die Rohrböden oder die Vergussmassen einbettet sind Solche Ausführungsformen werden beispielsweise in der EP-A-0 329 980, der EP-A-0 841 086 oder der EP-A-0 848 987 beschrieben. Eine Mischform von parallel zu den Hohlfasermembranen angeordneten Abstandsfäden und von die Hohlfasermembranen umschlingenden Fäden ist in der EP-A- 0 464 737 oder der EP-A- 0 732 141 offenbart.

Bei einer weiteren Ausführungsform sind die Hohlfasermembranen des Membranbündels in Web- oder Wirkmatten angeordnet. In diese Matten sind die Hohlfasermembranen mittels Querfäden z.B. in Form textiler Fäden eingebunden. Solche Matten lassen sich nach bekannten Verfahren als Wirkmatte oder Webmatte, aber auch als Webbändchen, Strick- oder als Häkelmatte herstellen. In den Fällen des Webens oder Wirkens sind die Querfäden die quer zu den Hohlfasermembranen verlaufenden Web- bzw. Kettfäden. Durch diese Querfäden werden die Hohlfasermembranen zueinander beabstandet und in zueinander im Wesentlichen paralleler und stabiler Anordnung gehalten. Solche Matten und daraus hergestellte Hohlfasermembranbündel werden beispielsweise in der EP-A-0 442 147, der DE-A-43 08 850 oder der US-A-4 940 617 beschrieben.

Trotz der Verbesserung der Außenumströmung der Hohlfasermembranen durch die Anordnung von Abstandsfäden zwischen den Hohlfasermembranen in den Membranbündeln ergeben sich in den Bereichen entlang des Hohlfasermembranbündels im Modul, in denen in den Außenraum um die Hohlfasermembranen ein Fluid zugeführt wird oder in denen aus dem Außenraum ein Fluid abgezogen wird, d.h. in den Ein- bzw. Ausströmbereichen des Moduls Strömungsinhomogenitäten. Diese Strömungsinhomogenitäten wirken sich in einer ungleichmäßigen Verteilung bzw. in einem ungleichmäßigen Abziehen des Fluids über dem Bündelquerschnitt aus. Die Inhomogenitäten lassen sich vielfach auch nicht durch übliche konstruktive Maßnahmen in diesen Bereichen z.B. in Gestalt von Erweiterungen der Gehäuse im Einström- und/oder im Ausströmbereich gänzlich beseitigen. Bzgl. solcher Erweiterungen sei beispielsweise auf die Darstellungen in der EP-A-0 329 980 verwiesen.

Es ist daher Aufgabe der vorliegenden Erfindung, ein Hohlfasermembranbündel zur Verfügung zu stellen, das in einem Hohlfasermembranmodul zum einen eine homogene Durchströmbarkeit für Fluide und gleichzeitig eine verbesserte Einströmung und/oder Ausströmung in das bzw. aus dem Hohlfasermembranbündel erlaubt. Ebenso ist es Aufgabe der vorliegenden Erfindung, einen Hohlfasermembranmodul mit darin in Längserstreckung des Moduls angeordnetem Hohlfasermembranbündel bereit zu stellen, bei dem die Nachteile bekannter Membranmodule zumindest reduziert sind und die eine verbesserte Strömungsverteilung für Fluide in den Einströmbereichen bzw. Ausströmbereichen in den Außenraum um die im Modul angeordneten Hohlfasermembranen aufweisen.

Die Aufgabe wird zum einen durch ein Hohlfasermembranbündel mit einer Längserstreckung, einem Membranbündelquerschnitt und einem ersten und einem zweiten Bündelende gelöst, wobei das Hohlfasermembranbündel eine Vielzahl von sich zwischen dem ersten und dem zweiten Bündelende erstreckenden Hohlfasermembranen umfasst sowie auf den Membranbündelquerschnitt bezogen einen Anteil von zwischen den Hohlfasermembranen angeordneten Fäden, die die Hohlfasermembranen auf Abstand halten. Das Hohlfasermembranbündel ist dadurch gekennzeichnet, dass die Fäden kürzer als die Hohlfasermembranen sind, so dass mindestens am ersten Ende des Hohlfasermembranbündels Hohlfasermembranen gegenüber den Fäden überstehen und das Hohlfasermembranbündel in einem vom ersten Ende ausgehenden ersten Endbereich einen geringeren Anteil an Fäden aufweist als in einem zwischen dem ersten und dem zweiten Bündelende liegenden Bündelbereich mit maximalem Anteil an Fäden.

Im erfindungsgemäßen Hohlfasermembranbündel werden die Hohlfasermembranen durch die zwischen den Hohlfasermembranen angeordneten Fäden gegeneinander auf Abstand gehalten. Hierdurch kann bei einer Durchströmung des Hohlfasermembranbündels eine über den Querschnitt des Membranbündels gesehen gleichmäßige Umströmung der Hohlfasermembranen an deren Außenseite erreicht werden.

Erfindungsgemäß ist gefordert, dass die Fäden kürzer als die Hohlfasermembranen sind, so dass mindestens am ersten Ende des Hohlfasermembranbündels Hohlfasermembranen gegenüber den Fäden überstehen und das Hohlfasermembranbündel in einem vom ersten Ende ausgehenden ersten Endbereich einen geringeren Anteil an Fäden aufweist als in einem an zwischen dem ersten und dem zweiten Bündelende liegenden Bündelbereich mit maximalem Anteil an Fäden. Hierdurch resultiert bei einem Membranmodul, der ein solches Membranbündel enthält, im Bereich des ersten Endes des Hohlfasermembranbündels ein geringerer Füllgrad mit größeren Zwischenräumen zwischen den Hohlfasermembranen. Als Folge daraus ergibt sich in diesem Bereich eine bessere Durchströmbarkeit des Bündels über dem Bündelquerschnitt und damit eine bessere Verteilung eines in diesen Bereich einströmenden Fluids über den Bündelquerschnitt bzw. ein gleichmäßigeres Abfließen eines aus diesem Bereich ausströmenden Fluids. Die bessere Verteilung bzw. das gleichmäßigere Abfließen des ein- bzw. ausströmenden Fluids wird durch den dort vorherrschenden geringeren Strömungswiderstand im Vergleich zu dem Bündelbereich mit maximalem Anteil an Fäden unterstützt.

In einer bevorzugten Ausführungsform stehen die Hohlfasermembranen am ersten und am zweiten Ende des Hohlfasermembranbündels über und das Hohlfasermembranbündel weist auch in einem vom zweiten Ende ausgehenden zweiten Endbereich einen geringeren Anteil an Fäden auf als in einem zwischen dem ersten und dem zweiten Bündelende liegenden Bündelbereich mit maximalem Anteil an Fäden. Bei einer solchen Ausführungsform lässt sich in einem Modul eine bessere Durchströmbarkeit des Bündels bzw. Umströmbarkeit der Hohlfasermembranen im Modulinneren an beiden Enden des Membranbündels erzielen und beispielsweise an einem Ende des Membranbündels ein Einströmbereich und am anderen Ende des Membranbündels ein Ausströmbereich realisieren.

Abhängig beispielsweise von der tatsächlichen Bündellänge oder vom Bündelquerschnitt kann die Länge des ersten und/oder die Länge des zweiten Endbereichs vorzugsweise im Bereich von 1 % bis 15 % der Bündellänge und besonders bevorzugt im Bereich von 5% bis 15% liegen. So kann etwa bei langen Bündeln die Länge des jeweiligen Endbereichs eher im unteren Prozentbereich der zuvor spezifizierten Bereiche und bei kürzeren Bündeln eher im oberen Prozentbereich liegen. Ebenso kann es bei dicken Hohlfasermembranbündeln zweckmäßig sein, Endbereichslängen im oberen Prozentbereich zu wählen.

In einer weiteren bevorzugten Ausführungsform kann die Länge des Bündelbereichs mit maximalem Anteil an Fäden 10% bis 90 % der Bündellänge betragen und in einer besonders bevorzugten Ausführungsform 10% bis 50%. Von besonderem Vorteil ist eine Ausführungsform, bei der die Länge des Bündelbereichs mit maximalem Anteil an Fäden 10% bis 30 % der Bündellänge beträgt. Hierbei kann die Länge des Bündelbereichs mit maximalem Anteil an Fäden davon abhängen, ob beispielsweise die Fäden zwischen den Hohlfasermembranen für eine ausreichende Beabstandung der Fäden und eine genügende Stabilisierung der Hohlfasermembranen im Gesamtbündel sorgen. Ebenso kann die Länge des Bündelbereichs mit maximalem Anteil an Fäden davon abhängen, ob in der Anwendung des Bündels in einem Modul bei einer Durchströmung des Hohlfasermembranbündels durch ein Fluid im Bündelbereich mit maximalem Anteil an Fäden ein genügend hoher Druckverlust erzeugt wird, der in dem Endbereich oder den Endbereichen mit geringerem Anteil an Fäden zu einer hinreichenden Verbesserung der Durchströmbarkeit im Endbereich bzw. in den Endbereichen führen kann.

Es ist von Vorteil, wenn der Anteil der Fäden im ersten und/oder zweiten Endbereich gegenüber dem Anteil der Fäden im Bündelbereich mit maximalem Anteil an Fäden im Mittel um mindestens 50 % verringert ist. Von besonderem Vorteil ist eine Verringerung des Anteils der Fäden im ersten und/oder zweiten Endbereich gegenüber dem Anteil der Fäden im Bündelbereich mit maximalem Anteil an Fäden im Mittel um mindestens 80 %. Hierdurch steht ein genügend großer Freiraum zwischen benachbarten Hohlfasermembranen zur Verfügung und es wird in zunehmendem Maße z.B. eine verbesserte Durchströmbarkeit im Sinne eine homogenen Verteilung eines in den Endbereich einströmenden Fluids über den Bündelquerschnitt erreicht. Da auch Ausführungen des Hohlfasermembranbündels umfasst sind, bei denen die Fäden in einem Endbereich an unterschiedlichen Positionen entlang des Hohlfasermembranbündels enden können, wird der Mittelwert des Anteils an Fäden im jeweiligen Endbereich gegenüber dem Anteil an Fäden im Bereich mit maximalem Anteil an Fäden betrachtet.

In einer besonders bevorzugten Ausführungsform sind der erste und/oder der zweite Einströmbereich frei von Fäden. Dabei ist bevorzugt, wenn die Fäden in dem zwischen dem ersten und dem zweiten Bündelende liegenden Bündelbereich mit maximalem Anteil an Fäden in einer Querschnittsebene entlang der Erstreckung des Hohlfasermembranbündels enden. Hierdurch ergibt sich eine klare Begrenzung des jeweiligen Endbereichs.

Hinsichtlich der im erfindungsgemäßen Hohlfasermembranbündel eingesetzten Fäden sind vielfältige Ausgestaltungen möglich, und es kann auf bekannte als Abstandshalter zwischen Hohlfasermembranen eingesetzte Fäden zurückgegriffen werden. So kann es sich bei den Fäden um Monofilament- oder Multifilamentgarne handeln, wobei die Monofilament- oder Multifilamentgarne z. B. eine Ondulation oder eine Texturierung aufweisen können. Es sind auch verschiedene Querschnittsgeometrien für die Monofilamentgarne bzw. die Filamente der Multifilamentgarns möglich. Die Garne bzw. Filamente sie können z.B. rund, oval, sternförmig, rechteckig usw. sein. Die Fäden können auch entlang ihrer Erstreckung sich verändernde Querschnittsformen aufweisen. Der Titer der Fäden kann vorzugsweise im Bereich von 5 bis 2000 dtex liegen. Im Falle, dass es sich bei den Fäden um Multifilamentgarne handelt, können die Fäden vorzugsweise aus 5 bis 2000 Einzelfilamenten aufgebaut sein.

Bezüglich der Anordnung der Fäden im Hohlfasermembranbündel sind verschiedene Ausführungsformen möglich. In einer bevorzugten Ausführungsform des Hohlfasermembranbündels weisen die Fäden ein erstes und ein zweites Fadenende auf und das erste und das zweite Fadenende sind dem ersten bzw. dem zweiten Bündelende zugewandt. Hierbei können sich die Fäden geradlinig zwischen den Hohlfasermembranen im Bündel erstrecken und zu den Hohlfasermembranen parallel sein. Sie können jedoch auch meanderförmig verlaufen oder spiralförmig einzelne Hohlfasermembranen oder mehrere in Teilbündeln zusammengefasste Hohlfasermembranen umschlingen. Des Weiteren können beispielsweise mehrere nebeneinander auf Abstand und in Ebenen angeordnete Fäden changierend über der Breite des Hohlfasermembranbündels angeordnet sein.

In einer weiteren bevorzugten Ausführungsform des erfindungsgemäßen Hohlfasermembranbündels können die Hohlfasermembranen des Hohlfasermembranbündels mittels der Fäden zu Matten miteinander verbunden sein, wie sie beispielsweise in der EP-A-0 442 147 oder der DE-A-43 08 850 beschrieben sind. In diesen Fällen können die Fäden zueinander parallel im Wesentlichen in Umfangsrichtung des Hohlfasermembranbündels verlaufen, während sich die Hohlfasermembranen zwischen erstem und zweitem Bündelende entlang der Längserstreckung des Hohlfasermembranbündels erstrecken. Dabei sind die das Hohlfasermembranbündel ausbildenden Matten so auszuführen, dass entsprechend der Erfindung mindestens am ersten Enden des Hohlfasermembranbündels Hohlfasermembranen überstehen und das Hohlfasermembranbündel in einem vom ersten Ende ausgehenden ersten Endbereich einen geringeren Anteil an Fäden aufweist als in einem an zwischen dem ersten und dem zweiten Bündelende liegenden mittleren Bündelbereich mit maximalem Anteil an Fäden.

Vorzugsweise liegt im mittleren Bündelbereich mit maximalem Anteil an Fäden das auf den Membranbündelquerschnitt bezogene Verhältnis der Querschnittsfläche der Gesamtheit der Fäden zur Querschnittsfläche der Gesamtheit der Hohlfasermembranen in einem Bereich von 0,1 bis 10 %. Hierdurch lässt sich zum einen eine gute Durchströmbarkeit des Hohlfasermembranbündels im Bereich mit maximalem Anteil an Fäden erreichen, zum anderen aber eine gute Durchströmbarkeit des Hohlfasermembranbündels über dem Bündelquerschnitt im ersten und/oder zweiten Endbereich. Besonders bevorzugt liegt das Verhältnis in einem Bereich von 0,2 bis 5 % und in einer noch bevorzugteren Ausführungsform in einem Bereich von 1 bis 5 %.

Bei dem Hohlfasermembranbündel kann es sich um ein Vollbündel handeln oder auch beispielsweise um ein hohlzylinderförmiges Bündel, das beispielsweise um ein Kernrohr oder einen Vollzylinder angeordnet ist. Der Querschnitt des Hohlfasermembranbündels kann eine beliebige Außenkontur aufweisen wie z.B. eine kreisförmige, ovale, elliptische, dreilappige, vierlappige, dreieckige, rechteckige, quadratische Kontur. Vorzugsweise weist das Hohlfasermembranbündel eine kreisförmige Außenkontur auf.

Mit den zuvor beschriebenen Ausgestaltungen der erfindungsgemäßen Hohlfasermembranbündel können Hohlfasermembranmodule zur Verfügung gestellt werden, die eine verbesserte Strömungsverteilung für Fluide aufweisen, die im Bereich der Ein- bzw. Ausströmbereiche in den Außenraum um die im Membranmodul angeordneten Hohlfasermembranen einströmen oder aus dem Außenraum ausströmen. Daher wird die erfindungsgemäß gestellte Aufgabe des Weiteren durch einen Membranmodul mit einem zylinderförmigen Gehäuse mit einer Längserstreckung und einem ersten und einem zweiten Gehäuseende, einem sich zwischen dem ersten und dem zweiten Gehäuseende erstreckenden Gehäusemantel sowie einer Gehäuseinnenwand gelöst, wobei im Gehäuse ein in Richtung der Längserstreckung des Gehäuses orientiertes Hohlfasermembranbündel gemäß vorliegender Erfindung angeordnet ist.

In einer bevorzugten Ausgestaltung des Membranmoduls sind die Hohlfasermembranen des Hohlfasermembranbündels zumindest mit ihrem dem ersten Bündelende zugeordneten Ende in eine am ersten Ende des Gehäuses angeordnete und mit der Gehäuseinnenwand fluiddicht verbundene erste Vergussmasse eingebettet und das Gehäuse ist im Bereich seines zweiten Endes durch einen Verschluss geschlossen,
- wobei durch die erste Vergussmasse, die Gehäuseinnenwand sowie den Verschluss im Bereich des zweite Endes des Gehäuses ein die Hohlfasermembranen umgebender und sich zwischen der ersten Vergussmasse und dem Verschluss im Bereich des zweiten Ende des Gehäuses erstreckender Außenraum ausgebildet ist,
- wobei die Hohlfasermembranen des Hohlfasermembranbündels am ersten Bündelende so in die erste Vergussmasse eingebettet sind, dass die Hohlfasermembranen durch die erste Vergussmasse hindurchtreten und am ersten Bündelende offen sind und mit einer am ersten Ende des Gehäuses stirnseitig angeordneten ersten Kammer in Fluidverbindung stehen,
- wobei die erste Kammer durch eine stirnseitig am ersten Gehäuseende angebrachte erste Endkappe abgeschlossen ist und die erste Endkappe eine erste Anschlussöffnung zur Einleitung oder Ausleitung eines Fluids aufweist,
- wobei das erste Bündelende so in die erste Vergussmasse eingebettet ist, dass das Bündel entlang seiner Erstreckung im Außenraum in einem an die erste Vergussmasse angrenzenden ersten Außenraumabschnitt einen geringeren Anteil an Fäden aufweist als in einem an zwischen dem ersten und dem zweiten Bündelende liegenden mittleren Bündelbereich mit maximalem Anteil an Fäden und der erste Außenraumabschnitt in Erstreckungsrichtung des Bündels eine Länge von mindestens 5 mm aufweist und
   wobei der Membranmodul einen ersten Anschlussstutzen aufweist, über den im Bereich des ersten Außenraumabschnitts ein Fluid in den Außenraum eingeleitet bzw. aus dem Außenraum abgeleitet werden kann.

Durch diese Ausgestaltung des erfindungsgemäßen Membranmoduls resultiert im ersten Außenraumabschnitt ein Bereich des Hohlfasermembranbündels, in dem wegen des dort vorliegenden geringeren Anteils an Fäden zwischen den Hohlfasermembranen ein größerer Anteil an Zwischenräumen zwischen den Hohlfasermembranen vorliegt. Dies hat in Verbindung mit der geforderten Mindestlänge des ersten Außenraumabschnitts von 5 mm zur Folge, dass z.B. bei Einleitung eines Fluids über den ersten Anschlussstutzen in den Außenraum im Bereich des ersten Außenraumabschnitts, der in diesem Fall den Einströmbereich darstellt, die Hohlfasermembranen in diesem Bereich besser umströmt werden können und eine homogenere Verteilung des Fluids über dem Bündelquerschnitt resultiert. Ebenso wird im Fall, dass ein Fluid aus dem Außenraum über den ersten Anschlussstutzen im Bereich des ersten Außenraumabschnitts, der in diesem Fall den Ausströmbereich darstellt, abgeleitet werden soll, eine über den Bündelquerschnitt homogene Ableitung aus dem Außenraum erreicht. Durch die Ausgestaltung des erfindungsgemäßen Membranmoduls im Einström- und/oder Ausströmbereich kann so insbesondere bei großen Hohlfasermembranbündelquerschnitten ein verbessertes Strömungsverhalten über dem Bündelquerschnitt erreicht werden.

Wie ausgeführt, kann es sich bei dem Hohlfasermembranbündel um ein Vollbündel oder auch um ein hohlzylinderförmiges Bündel handeln, das um ein Kernrohr oder um einen Vollzylinder angeordnet ist. Bei solchen Ausführungsformen kann der erste Anschlussstutzen, über den ein Fluid in den Außenraum einleitbar bzw. aus dem Außenraum ableitbar ist, seitlich am Gehäusemantel im Bereich des ersten Außenraumabschnitts angeordnet sein.

In einer weiteren vorteilhaften Ausführungsform ist das Hohlfasermembranbündel um ein Kernrohr angeordnet, das zusammen mit den Hohlfasermembranen in die erste Vergussmasse eingebettet ist. Das Kernrohr führt durch die erste Vergussmasse sowie durch die erste Kammer hindurch, führt aus der ersten Kammer über die erste Endkappe heraus und steht mit einem Anschlussstutzen in Fluidverbindung, der in diesem Fall der erste Anschlussstutzen ist. Im Bereich des ersten Außenraumabschnitts, in dem das Hohlfasermembranbündel einen geringeren Anteil an Fäden aufweist als in einem an zwischen dem ersten und dem zweiten Bündelende liegenden mittleren Bündelbereich mit maximalem Anteil an Fäden, weist das Kernrohr in seiner Wand Perforationen auf. Über diese Perforationen kann ein Fluid im Bereich der ersten Außenraumabschnitts aus dem Kernrohr in den Außenraum oder aus dem Außenraum in das Kernrohr strömen.

In einer bevorzugten Ausführungsform des erfindungsgemäßen Membranmoduls können die Hohlfasermembranen mit ihren dem zweiten Ende des Gehäuses zugewandten Enden im Außenraum enden, wodurch sie an diesen Enden frei von einem im Außenraum befindlichen Fluid umströmbar sind. Vorzugsweise sind die Hohlfasermembranen am zweiten Bündelende geschlossen. Das Verschließen der Hohlfasermembranenden kann beispielsweise durch Verkleben oder Verschweißen erfolgen. Es kann sich bei den dem zweiten Ende des Gehäuses zugewandten Enden auch um U-förmig ausgebildete Enden von in Schlaufen gelegten Hohlfasermembranen handeln, wobei diese U-förmig ausgebildeten Enden naturgemäß dann geschlossen sind. In diesem Fall sind die gegenüberliegenden, dem ersten Ende des Gehäuses zugewandten offenen Enden der Hohlfasermembranen zusammen in der ersten Vergussmasse eingebettet.

In Fällen, in denen die dem zweiten Ende des Gehäuses zugewandten Enden der Hohlfasermembranen im Außenraum enden, kann das Gehäuse an seinem zweiten Ende beispielsweise durch eine stirnseitig angebrachte zweite Endkappe verschlossen sein, die gleichzeitig den Verschluss des Gehäuses an seinem zweiten Ende ausbildet. Die zweite Endkappe kann einen zweiten Anschlussstutzen zur Einleitung oder Ausleitung eines Fluid in den Außenraum aufweisen, so dass der Außenraum von seinem einen Ende zu seinem anderen Ende von einem Fluid durchströmbar ist. Natürlich kann der zweite Anschlussstutzen auch seitlich im Gehäusemantel angebracht sein und so in den Außenraum um die Hohlfasermembranen führen. In diesem Fall ist es von Vorteil, wenn das Hohlfasermembranbündel mit seinem zweiten Bündelende in einem Abstand vor der zweiten Endkappe endet, so dass ein den Außenraum durchströmendes Fluid z.B. nach Austritt aus dem Bündel an dessen zweitem Ende sich in einem vom Membranbündel freien Bereich im Außenraum sammeln und über den gesamten Querschnitt des Membranbündels homogen abgezogen werden kann.

In Fällen, in denen bei dieser Ausführungsform das Hohlfasermembranbündel um ein Kernrohr angeordnet ist, das zusammen mit den Hohlfasermembranen in die erste Vergussmasse eingebettet ist und das im Bereich des ersten Außenraumabschnitts Perforationen zur Einleitung eines Fluids in den Außenraum bzw. zur Ableitung eines Fluids aus dem Außenraum aufweist, kann das Kernrohr auch an seinem dem zweiten Gehäuseende zugewandten Abschnitt Perforationen aufweisen, über die ein Fluid aus dem Außenraum in das Kernrohrinnere einströmen kann bzw. über die ein Fluid aus dem Kernrohrinneren in den Außenraum ausströmen kann. An seinem dem zweiten Gehäuseende zugewandten Ende kann das Kernrohr durch die zweite Endkappe hindurchtreten, wobei es gegenüber der zweiten Endkappe fluiddicht abgedichtet ist, und z.B. mit einem an der zweiten Endkappe angebrachten zweiten Anschlussstutzen verbunden sein. Bei derartigen Ausführungsformen ist das Kernrohr vorteilhafterweise entlang seiner Erstreckung zwischen dem ersten Außenraumabschnitt und seinem dem zweiten Ende des Gehäuses zugewandten Abschnitt verschlossen, so dass das Kernrohr über seine Erstreckung entlang des Hohlfasermembranbündels nicht von einem Fluid durchströmbar ist.

Bei Ausführungsformen des erfindungsgemäßen Membranmoduls, bei denen die dem zweiten Ende des Gehäuses zugewandten Enden der Hohlfasermembranen im Außenraum enden, kann das Gehäuse an seinem zweiten Ende in einer weiteren bevorzugten Alternative durch eine am zweiten Gehäuseende angebrachte undurchlässige und fluiddicht mit der Gehäuseinnenwand verbundene und den Verschluss ausbildende zweite Vergussmasse verschlossen sein. In einer Ausführungsform kann der erfindungsgemäße Membranmodul dann einen seitlich im Gehäusemantel angebrachten zweiten Anschlussstutzen aufweisen, der im Bereich vor der zweiten Vergussmasse in den Außenraum mündet und mit dem Außenraum in Fluidverbindung steht. Hierdurch ist der Außenraum zwischen erstem Anschlussstutzen und zweitem Anschlussstutzen für ein Fluid durchströmbar. In einer weiteren Alternative kann das Gehäuse an seinem zweiten Ende durch eine zweite Vergussmasse abgeschlossen sein, die mindestens eine durchgehende Öffnung aufweist, und stirnseitig am zweiten Gehäuseende eine zweite Endkappe mit einem zweiten Anschlussstutzen aufweisen. Zwischen zweiter Vergussmasse und zweiter Endkappe kann dann eine zweite Kammer ausgebildet sein und der Außenraum und die zweite Kammer können über die mindestens eine Öffnung in der zweiten Vergussmasse in Fluidverbindung stehen. Auf diese Weise ist ein Fluid z.B. über die mindestens eine Öffnung in der zweiten Vergussmasse, die zweite Kammer und den zweite Anschlussstutzen in der zweiten Endkappe aus dem Außenraum ableitbar. Die mindestens eine Öffnung kann z.B. in Form einer oder mehrerer Bohrungen durch die zweite Vergussmasse oder in Form mindestens eines in die Vergussmasse eingebetteten Röhrchens vorliegen.

Natürlich sind auch Mischformen denkbar. Beispielsweise kann das Hohlfasermembranbündel um ein Kernrohr angeordnet sein, das zusammen mit den Hohlfasermembranen in die erste Vergussmasse eingebettet ist und nur im Bereich des ersten Außenraumabschnitts Perforationen zur Einleitung eines Fluids in den Außenraum bzw. zur Ableitung eines Fluids aus dem Außenraum aufweist.

An seinem zweiten Ende kann dann das Gehäuse durch eine am zweiten Gehäuseende angebrachte zweite Vergussmasse verschlossen sein, in die das Kernrohr mit seinem der zweiten Vergussmasse zugewandten Ende eingebettet sein kann, wobei das Kernrohr an diesem Ende oder entlang seiner Erstreckung zwischen erstem Außenraum und diesem Ende verschlossen ist. Seitlich im Gehäusemantel kann das Gehäuse dann einen zweiten Anschlussstutzen aufweisen, der in den Außenraum mündet.

In einer weiteren vorteilhaften Ausgestaltung des Membranmoduls sind die Hohlfasermembranen des Hohlfasermembranbündels des Weiteren mit ihrem dem zweiten Bündelende zugeordneten Ende in eine am zweiten Ende des Gehäuses angeordnete und mit der Gehäuseinnenwand fluiddicht verbundene zweite Vergussmasse eingebettet, die gleichzeitig den Verschluss des Gehäuses im Bereich seines zweiten Endes ausbildet.

In einer Ausführungsform kann der Modul dabei ein Hohlfasermembranbündel enthalten, welches nur am ersten Bündelende einen geringeren Anteil an Fäden aufweist und bei welchem sich im Bereich des zweiten Bündelendes die Fäden bis zum zweiten Bündelende erstrecken, also zusammen mit den Hohlfasermembranen im Wesentlichen in der gleichen Querschnittsebene des Bündels enden. In diesem Fall können dann die Fäden zusammen mit den Hohlfasermembranen in der zweiten Vergussmasse eingebettet sein.

Vorzugsweise enthält der Membranmodul jedoch ein Hohlfasermembranbündel, das auch in einem vom zweiten Ende ausgehenden zweiten Endbereich einen geringeren Anteil an Fäden aufweist als in einem an zwischen dem ersten und dem zweiten Bündelende liegenden Bündelbereich mit maximalem Anteil an Fäden, wobei das zweite Bündelende so in die zweite Vergussmasse eingebettet ist, dass das Bündel entlang seiner Erstreckung im Außenraum in einem an die zweite Vergussmasse angrenzenden zweiten Außenraumabschnitt einen geringeren Anteil an Fäden aufweist als in einem an zwischen dem ersten und dem zweiten Bündelende liegenden Bündelbereich mit maximalem Anteil an Fäden und der zweite Außenraumabschnitt in Erstreckungsrichtung des Bündels eine Länge von mindestens 5 mm aufweist. Vorteilhafterweise weist der Membranmodul dann in seinem Gehäusemantel im Bereich vor der zweiten Vergussmasse einen mit dem Außenraum in Fluidverbindung stehenden zweiten Anschlussstutzen auf, über den ein Fluid in den Außenraum eingeleitet oder aus diesem abgezogen werden kann. Der Außenraum um die Hohlfasermembranen ist damit von einem Fluid von einem zum anderen Ende des Gehäuses im Cross-Flow Modus durchströmbar. Infolge des Vorhandenseins des ersten und des zweiten Außenraumabschnitts mit zumindest reduziertem Anteil an Fäden weist der Membranmodul dann einen Einströmbereich und einen Ausströmbereich bzgl. des Außenraums auf, in dem ein über den Bündelquerschnitt zumindest weitgehend homogenes Einströmen bzw. aus dem ein über den Bündelquerschnitt zumindest weitgehend homogenes Ausströmen eines Fluids erfolgen kann.

Dabei können in einer bevorzugten Variante die Hohlfasermembranen mit ihrem zweiten Ende so in die zweite Vergussmasse eingebettet sein, dass sie an diesem Ende geschlossen sind. Dies kann dadurch erfolgen, dass die zweiten Enden der Hohlfasermembranen innerhalb der zweiten Vergussmasse enden und durch die zweite Vergussmasse verschlossen werden. Bei einer solchen Ausführungsform können dann die Hohlfasermembranen bzgl. ihrer Innenhohlräume, d.h. bzgl. ihrer Lumina vom ersten Ende des Hohlfasermembranbündels im Dead-End Modus angeströmt werden.

In einer ebenso bevorzugten Variante können die Hohlfasermembranen des Hohlfasermembranbündels am zweiten Bündelende so in die zweite Vergussmasse eingebettet sein, dass die Hohlfasermembranen durch die zweite Vergussmasse hindurchtreten und die Lumina der Hohlfasermembranen am zweiten Bündelende offen sind. Stirnseitig vor dem zweiten Ende des Gehäuses ist eine zweite Endkappe angeordnet, wobei die zweite Endkappe so ausgeführt ist, dass zwischen zweiter Vergussmasse und zweiter Endkappe eine zweite Kammer ausgebildet ist. Die Lumina der Hohlfasermembranen münden in diesem Fall in die zweite Kammer und stehen mit dieser in Fluidverbindung. Die zweite Endkappe weist dann eine zweite Anschlussöffnung zur Einleitung oder Ausleitung eines Fluids in die bzw. aus der zweiten Kammer auf. Bei einer solchen Ausführungsform sind also die Hohlfasermembranen in ihren Lumina von einem Fluid im Cross-Flow Modus durchströmbar.

Auch beispielsweise bei dieser Ausführungsform, bei denen die Hohlfasermembranen im Bereich der Gehäuseenden in eine erste und in eine zweite Vergussmasse eingebettet sind und in eine erste und in eine zweite stirnseitige Kammer münden, sind Ausgestaltungen des erfindungsgemäßen Membranmoduls mit einem um ein Kernrohr angeordnetem Hohlfasermembranbündel möglich. In einer hierbei bevorzugten Ausführungsform kann das Hohlfasermembranbündel um ein Kernrohr angeordnet sein, das zusammen mit den Hohlfasermembranen in die erste und in die zweite Vergussmasse eingebettet ist. Das Kernrohr kann durch die erste Vergussmasse sowie durch die erste Kammer hindurchführen, aus der ersten Kammer über die erste Endkappe herausführen und an seinem ersten Ende mit dem ersten Anschlussstutzen in Fluidverbindung stehen. Am zweiten Ende des Gehäuses kann das Kernrohr durch die zweite Vergussmasse hindurchtreten, die zweite Kammer durchlaufen, durch die zweite Endkappe hindurchtreten, wobei es gegenüber der zweiten Endkappe fluiddicht abgedichtet ist, und mit einem an der zweiten Endkappe angebrachten zweiten Anschlussstutzen in Fluidverbindung stehen. Im Bereich des ersten Außenraumabschnitts, in dem das Hohlfasermembranbündel einen geringeren Anteil an Fäden aufweist als in dem zwischen dem ersten und dem zweiten Bündelende liegenden mittleren Bündelbereich mit maximalem Anteil an Fäden, kann das Kernrohr in seiner Wand Perforationen aufweisen, über die ein Fluid im Bereich der ersten Außenraumabschnitts aus dem Kernrohr in den Außenraum oder aus dem Außenraum in das Kernrohr strömen kann. Ebenso kann das Kernrohr im Bereich des an die zweite Vergussmasse angrenzenden zweiten Außenraumabschnitts in seiner Wand Perforationen aufweisen, über die ein Fluid im Bereich der zweiten Außenraumabschnitts aus dem Kernrohr in den Außenraum oder aus dem Außenraum in das Kernrohr strömen kann.

Bei einer solchen Ausführungsform kann beispielsweise ein erstes Fluid über den ersten Anschlussstutzen in das Kernrohr einströmen und im Bereich des ersten Außenraumabschnitts, in dem ein geringerer Anteil an Fäden vorliegt und damit die Umströmung der Hohlfasermembranen verbessert ist, über die Perforationen in der Kernrohrwand in den ersten Außenraumabschnitt einströmen. Anschließend kann das Fluid entlang der Hohlfasermembranen den Außenraum zwischen der ersten Vergussmasse und der zweiten Vergussmasse durchströmen. Dabei kann beispielsweise eine Filtration eines Teils des ersten Fluids über die Wände der Hohlfasermembranen in die Lumina der Hohlfasermembranen erfolgen. Der verbleibende Teil des ersten Fluids strömt im Bereich des zweiten Außenraumabschnitts, in dem ebenfalls ein geringerer Anteil an Fäden vorliegt, über die Perforationen in der Kernrohrwand aus dem zweiten Außenraumabschnitt in das Kernrohr ein und strömt aus diesem über den zweiten Anschlussstutzen aus dem Membranmodul aus.

Über die zweite Anschlussöffnung in der stirnseitig vor dem zweiten Ende des Gehäuses angeordneten zweiten Endkappe kann dann beispielsweise ein zweites Fluid in die zwischen zweiter Endkappe und zweiter Vergussmasse ausgebildete zweite Kammer eingeleitet werden. Von dort kann das zweite Fluid in die offenen Lumina der Hohlfasermembranen einströmen und die Hohlfasermembranen lumenseitig durchströmen, wobei es das Filtrat des ersten Fluids aufnehmen kann. Das so angereicherte zweite Fluid verlässt die Hohlfasermembranen am ersten Bündelende und strömt in die am ersten Ende des Gehäuses stirnseitig angeordnete erste Kammer ein. Aus dieser strömt das angereicherte zweite Fluid über die erste Anschlussöffnung in der ersten Kappe aus dem Membranmodul aus.

Natürlich ist es auch möglich, bei dem vorliegenden Membranmodul mit der erfindungsgemäßen Ausgestaltung im Einströmbereich und/oder Ausströmbereich des Moduls weitere beispielsweise bekannte Maßnahmen z.B. mit dem Ziel zu kombinieren, damit weitere Verbesserungen bzgl. des Einström- bzw. Ausströmverhaltens zu erreichen. So kann beispielsweise das Gehäuse im Abschnitt des Einström- bzw. Ausströmbereichs entlang des Gehäusemantels eine Erweiterung aufweisen und im mittleren Bereich das Hohlfasermembranbündel vom Gehäusemantel eng umschlossen sein. Im Einströmbereich bzw. Ausströmbereich kann dazu der Durchmesser des Gehäusemantels in Richtung auf das jeweilige Gehäuseende stetig, z.B. in Form eines Kegelstumpfes, oder stufenförmig zunehmen.

Der erfindungsgemäße Membranmodul lässt sich bestens für eine Vielzahl von Anwendungen einsetzen, bei denen in den Außenraum um im Modul angeordnete Hohlfasermembranen ein Fluid eingeleitet und/oder aus dem Außenraum abgeleitet wird. Als Beispiele seien Module für Filtration, für Gasaustausch, Gastrennung genannt. Die erfindungsgemäßen Module können auch Einsatz finden als Membranadsorber oder als Kombinationen von Membranfiltern mit Adsorbern. Ausgestaltungen des erfindungsgemäßen Membranmoduls, bei denen das Hohlfasermembranbündel an beiden Enden in eine Vergussmasse eingebettet ist, die Hohlfasern an beiden Enden geöffnet sind und sowohl einen erfindungsgemäßen Einströmbereich als auch einen erfindungsgemäßen Ausströmbereich aufweisen, sind hervorragend als Dialysatoren z.B. für die Hemodialyse einsetzbar.

Der erfindungsgemäße Membranmodul enthaltend das erfindungsgemäße Hohlfasermembranbündel wird anhand der folgenden Figuren näher erläutert. Die Figuren zeigen in schematischer Darstellung beispielhaft bevorzugte Ausführungsformen des erfindungsgemäßen Membranmoduls bzw. des erfindungsgemäßen Hohlfasermembranbündels, die jedoch nicht einschränkend zu verstehen sind.

Es zeigen:
- Figur 1:: einen Cross-Flow Membranmodul gemäß der Erfindung mit einem Hohlfasermembranbündel, welches beidseitig in Vergussmassen eingebettet und an seinen beiden Enden frei von Fäden ist.
- Figur 2:: einen Cross-Flow Membranmodul gemäß der Erfindung mit einem Hohlfasermembranbündel, welches beidseitig in Vergussmassen eingebettet und an seinem ersten Ende frei von Fäden ist.
- Figur 3:: einen Dead -End Membranmodul gemäß der Erfindung mit einem Hohlfasermembranbündel, welches beidseitig in Vergussmassen eingebettet ist, an seinem ersten Ende offene Hohlfasermembranen aufweist und an seinen beiden Enden frei von Fäden ist.
- Figur 4:: einen Cross-Flow Membranmodul gemäß der Erfindung mit einem Hohlfasermembranbündel, welches beidseitig in Vergussmassen eingebettet an seinen beiden Enden frei von Fäden ist und der in der zweiten Vergussmasse Öffnungen aufweist, die mit dem Außenraum um die Hohlfasermembranen in Fluidverbindung stehen.
- Figur 5:: einen Cross-Flow Membranmodul gemäß der Erfindung mit einem hohlzylinderförmigen Hohlfasermembranbündel, welches um ein Kernrohr herum angeordnet, beidseitig in Vergussmassen eingebettet und an seinen beiden Enden frei von Fäden ist.

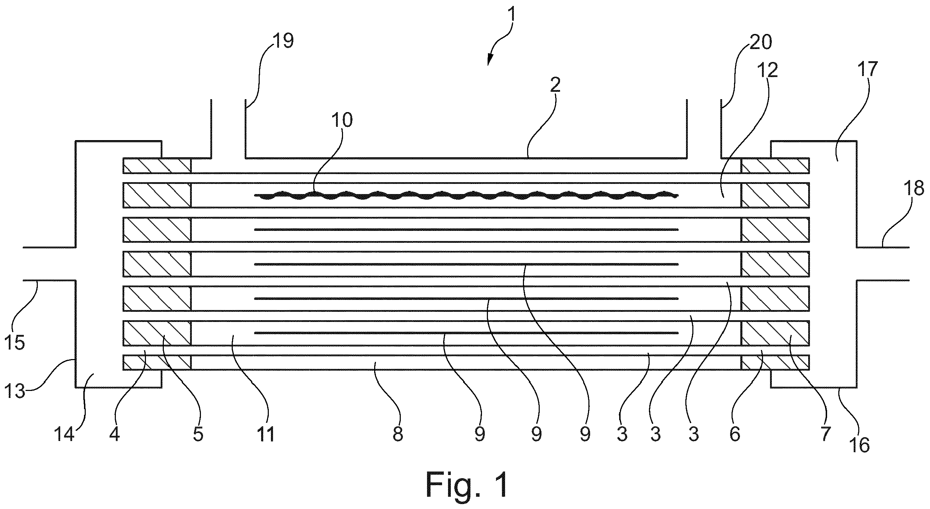

Figur 1 zeigt einen Membranmodul 1 mit einem Gehäuse 2 und einem im Gehäuse 2 angeordneten Bündel von Hohlfasermembranen 3, welche mit ihrem ersten Ende 4 in eine erste Vergussmasse 5 und mit ihrem zweiten Ende 6 in eine zweite Vergussmasse 7 so eingebettet sind, dass sie durch die jeweilige Vergussmasse 5, 7 hindurchtreten und stirnseitig vor den Vergussmassen 5, 7 offen sind. Dadurch sind die Lumina der Hohlfasermembranen 3 von einem Fluid im Cross-Flow Modus durchströmbar. Zwischen der ersten Vergussmasse 5 und der zweiten Vergussmasse 7 ist um die Hohlfasermembranen 3 ein vom Gehäuse 2 begrenzter Außenraum 8 ausgebildet. In einem mittleren Bündelbereich entlang der Hohlfasermembranen 3 zwischen den Vergussmassen 5, 7 sind im Hohlfasermembranbündel zwischen den Hohlfasermembranen 3 Fäden 9, 10 als Abstandshalter angeordnet, die als gerade Fäden 9 oder als ondulierte Fäden 10 vorliegen können. In diesem mittleren Bündelbereich liegen die Fäden 9, 10 in einem maximalen Anteil vor, wohingegen in einem zur ersten Vergussmasse 5 benachbarten ersten Außenraumabschnitt 11 und in einem zur zweiten Vergussmasse 7 benachbarten zweiten Außenraumabschnitt 12 das Hohlfasermembranbündel vorliegend frei von Fäden 9,10 ist.

Stirnseitig vor der ersten Vergussmasse 5 ist eine erste Endkappe 13 so angeordnet, dass zwischen der ersten Vergussmasse 5 und der ersten Endkappe 13 eine erste Kammer 14 ausgebildet ist, die am ersten Ende 4 der Hohlfasermembranen 3 mit den Lumina der Hohlfasermembranen 3 in Fluidverbindung steht. Die erste Endkappe 13 weist eine erste Anschlussöffnung 15 auf, über die ein Fluid in die erste Kammer 14 z.B. einleitbar ist. Stirnseitig vor der zweiten Vergussmasse 7 ist eine zweite Endkappe 16 angeordnet. Zwischen zweiter Vergussmasse 7 und zweiter Endkappe 16 ist eine zweite Kammer 17 ausgebildet, die am zweiten Ende 6 der Hohlfasermembranen 3 mit den Lumina der Hohlfasermembranen 3 in Fluidverbindung steht. Die zweite Endkappe 16 weist eine zweite Anschlussöffnung 18 auf, über die beispielsweise ein Fluid aus der zweiten Kammer ausleitbar ist. Auf diese Weise können die Hohlfasermembranen in ihren Lumina im Cross-Flow Modus von einem Fluid durchströmt werden.

Das Gehäuse 2 weist an seinem der ersten Vergussmasse 5 zugewandten Ende im Bereich des ersten Außenraumabschnitts 11 einen ersten Anschlussstutzen 19 und an seinem der zweiten Vergussmasse 7 zugewandten Ende im Bereich des zweiten Außenraumabschnitts 12 einen zweiten Anschlussstutzen 20 auf, mittels derer der Außenraum 8 von einem Fluid entlang der Hohlfasermembranen 3 durchströmbar ist. So kann beispielsweise ein Fluid über den ersten Anschlussstutzen 19 im Bereich des ersten Außenraumabschnitt 11 in das Gehäuse 2 bzw. den Außenraum 8 eingeleitet werden. Aufgrund des wegen des Fehlens der Fäden 9, 10 geringeren Füllgrads im Bereich des ersten Außenraumabschnitts 11 resultiert in diesem Bereich eine gute Durchströmbarkeit des Hohlfasermembranbündels über dem Bündelquerschnitt und damit eine gute Verteilung eines in diesen Bereich einströmenden Fluids über den Bündelquerschnitt. Das über den ersten Anschlussstutzen 19 eingeleitet Fluid strömt dann gleichmäßig über dem Bündelquerschnitt verteilt entlang der Hohlfasermembranen 3 in Richtung der zweiten Vergussmasse 7 und sammelt sich im zweiten Außenraumabschnitt 12. In diesem zweiten Außenraumabschnitt 12 liegt ebenfalls ein geringerer Füllgrad vor, woraus in diesem Bereich ebenfalls eine gute Durchströmbarkeit des Hohlfasermembranbündels über dem Bündelquerschnitt resultiert und damit ein gleichmäßiges Ableiten des in diesen Bereich einströmenden Fluids über dem Bündelquerschnitt erfolgt. Aus dem zweiten Außenraumabschnitt 12 verlässt das Fluid den Modul 1 über den zweiten Anschlussstutzen 20.

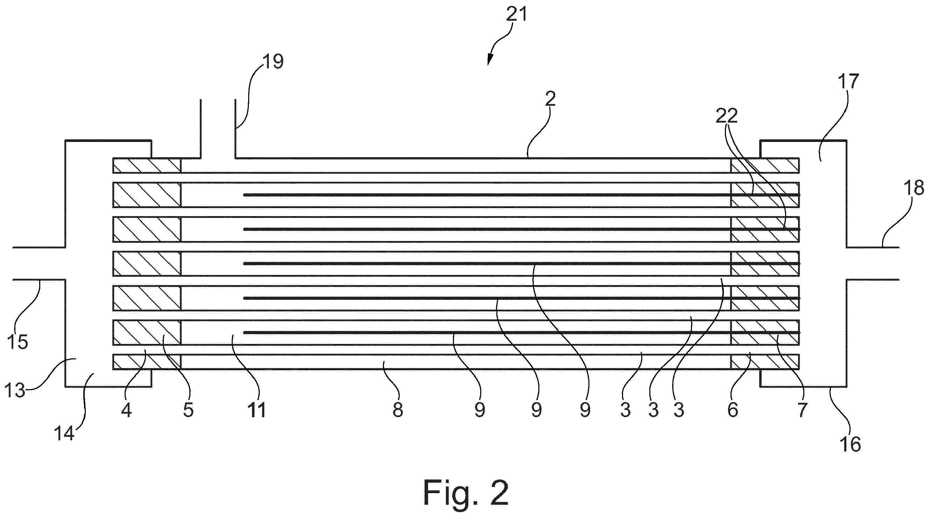

Figur 2 zeigt eine weitere bevorzugte Ausführungsform 21 eines Membranmoduls gemäß der Erfindung, enthaltend ein erfindungsgemäßes Hohlfasermembranbündel. Soweit die Elemente des in Figur 2 gezeigten Membranmoduls 21, aber auch die der in den folgenden Figuren gezeigten Ausführungsformen des Membranmoduls mit denen des in Figur 1 dargestellten Membranmoduls 1 übereinstimmen, sind sie mit denselben Bezugszeichen versehen und auf eine erneute Beschreibung dieser Elemente wird verzichtet.

Der Membranmodul 21 enthält ebenfalls im Gehäuse 2 angeordnet ein Bündel von Hohlfasermembranen 3, welche mit ihrem ersten Ende 4 in eine erste Vergussmasse 5 und mit ihrem zweiten Ende 6 in eine zweite Vergussmasse 7 eingebettet sind und durch die jeweilige Vergussmasse 5, 7 hindurchtreten. Die Hohlfasermembranen 3 sind stirnseitig vor den Vergussmassen 5, 7 offen, so dass die Lumina der Hohlfasermembranen 3 von einem Fluid im Cross-Flow Modus durchströmbar sind.

Im Unterschied zu dem in Figur 1 gezeigten Membranmodul 1 weist der in Figur 2 gezeigte Membranmodul 21 nur in einem zur ersten Vergussmasse 5 benachbarten ersten Außenraumabschnitt 11 einen Bereich auf, in dem das Hohlfasermembranbündel frei von Fäden 9,10 ist. Über die verbleibende Erstreckung des Bündels aus Hohlfasermembranen 3 sind zwischen den Hohlfasermembranen 3 Fäden 9 angeordnet, die sich in gleichbleibendem Verhältnis zu den Hohlfasermembranen 3 bis in die zweite Vergussmasse 7 hinein erstrecken und die an ihrem Ende 22 zusammen mit den Enden 6 der Hohlfasermembranen 3 in der zweiten Vergussmasse 7 eingebettet sind. Der in Figur 2 gezeigte Membranmodul 21 weist also keinen zur zweiten Vergussmasse 7 benachbarten zweiten Außenraumabschnitt 12 auf, in dem das Hohlfasermembranbündel einen reduzierten Anteil von Fäden 9 aufweist oder gar frei von Fäden 9 ist. Darüber hinaus weist der Membranmodul 21 nur an dem der ersten Vergussmasse 5 zugewandten Ende im Bereich des ersten Außenraumabschnitts 11 einen ersten Anschlussstutzen 19 auf, über den ein Fluid in den Außenraum 8 einleitbar ist bzw. aus dem Außenraum 8 ableitbar ist.

In Bezug auf den Außenraum 8 ist der Membranmodul 21 also auch im Dead-End Modus zu betreiben, wohingegen die Hohlfasermembranen 3 über ihre an ihren beiden Enden 4, 6 offenen Lumina im Cross-Flow Modus durchströmt werden können. Beispielsweise kann eine Flüssigkeit über die erste Anschlussöffnung 15 in der stirnseitig vor dem ersten Ende des Gehäuses 2 angeordnete erste Endkappe 13 in die erste Kammer 14 eingeleitet werden, von dort in die offenen Lumina der Hohlfasermembranen 3 einströmen und die Hohlfasermembranen 3 lumenseitig durchströmen. Hierbei kann zum Beispiel ein Teil der Flüssigkeit als Filtrat durch die Wände der Hohlfasermembranen 3 in den Außenraum 8 treten und entlang der Hohlfasermembranen 3 in den ersten Außenraumabschnitt 11 strömen, aus dem es den Membranmodul 21 über den ersten Anschlussstutzen 19 verlässt. Das in den Lumina der Hohlfasermembranen 3 verbleibende Retentat verlässt die Hohlfasermembranen 3 am zweiten Ende 6 der Hohlfasermembranen 3 und strömt in die am zweiten Ende des Gehäuses 2 stirnseitig angeordnete zweite Kammer 17 ein. Das Retentat verlässt den Membranmodul 21 über die zweite Anschlussöffnung 18 in der zweiten Endkappe 16.

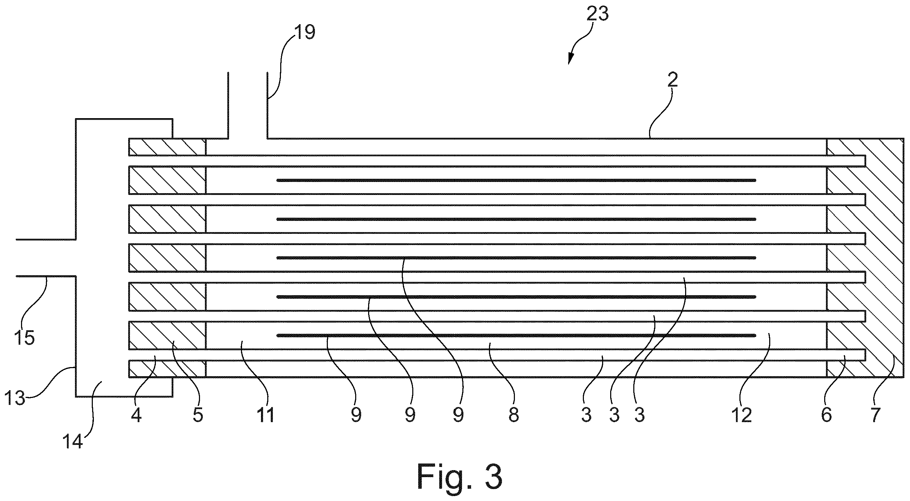

Figur 3 zeigt wie Figur 1 einen Membranmodul 23 mit einem Hohlfasermembranbündel, welches beidseitig in Vergussmassen 5, 7 eingebettet und an seinen beiden Enden frei von Fäden 9 ist. Die im Gehäuse 2 zu einem Bündel angeordneten Hohlfasermembranen 3 sind mit ihrem ersten Ende 4 in eine erste Vergussmasse 5 und mit ihrem zweiten Ende 6 in eine zweite Vergussmasse 7 eingebettet. Die Einbettung am ersten Ende 4 ist so ausgeführt, dass die Hohlfasermembranen durch die Vergussmasse 5 hindurchtreten, stirnseitig vor der Vergussmasse 5 offen sind und in die zwischen erster Vergussmasse 5 und erster Endkappe 13 ausgebildete erste Kammer 14 münden. An ihrem zweiten Ende 6 sind die Hohlfasermembranen 3 so in die zweite Vergussmasse 7 eingebettet, dass sie innerhalb der Vergussmasse 7 enden und durch die zweite Vergussmasse 7 verschlossen sind. Damit sind die Hohlfasermembranen 3 im Dead-End Modus anströmbar. Die zweite Vergussmasse 7 bildet gleichzeitig den Verschluss des Gehäuses 2 an dessen zweitem Ende. Ein aus der ersten Kammer 14 in die Lumina der Hohlfasermembranen 3 eingeleitetes Fluid tritt dann - bis auf einen beispielsweise über eine Filtration in den Hohlfasermembranen 3 zurückgehaltenen Anteil etwa in Gestalt von Partikeln einer bestimmten Größe - vollständig durch die Wände der Hohlfasermembranen 3 in den Außenraum 8 um die Hohlfasermembranen 3 über.

Der Membranmodul 23 weist nur an seinem der ersten Vergussmasse 5 zugewandten Ende im Bereich des ersten Außenraumabschnitts 11 einen ersten Anschlussstutzen 19 auf, mittels dessen ein Fluid in den Außenraum 8 eingeleitet bzw. mittels dessen ein Fluid aus dem Außenraum 8 abgeleitet werden kann. Für ein gleichmäßiges Einleiten und Verteilen des Fluids über dem Querschnitt des Bündels aus Hohlfasermembranen 3 ist das Bündel in einem zur ersten Vergussmasse 5 benachbarten ersten Außenraumabschnitt 11 frei von Fäden 9.

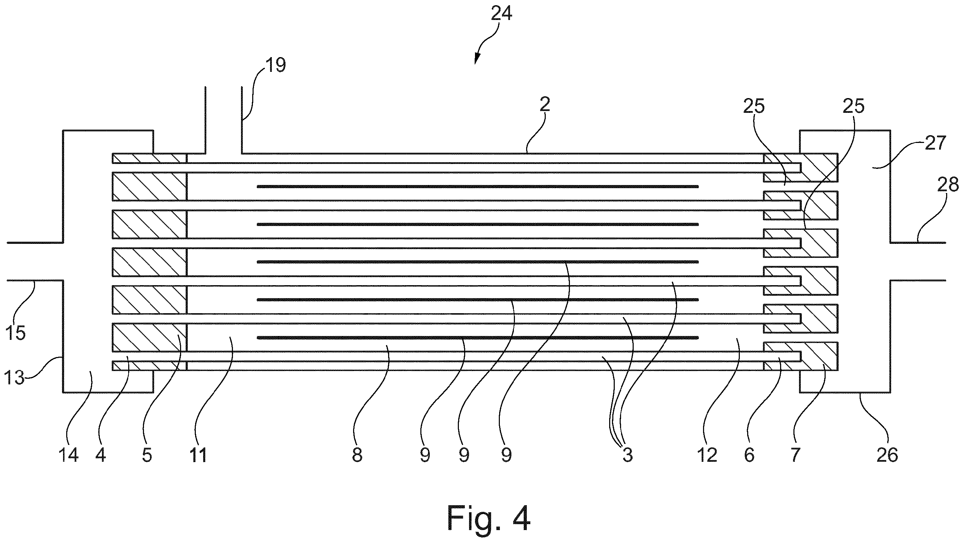

Der in Figur 4 gezeigte Membranmodul 24 weist einen ähnlichen Aufbau auf wie der in Figur 3 dargestellte Membranmodul 23. Membranmodul 24 weist ebenfalls ein Hohlfasermembranbündel auf, bei welchem die Hohlfasermembranen 3 beidseitig in Vergussmassen 5, 7 eingebettet sind und das in einem ersten Außenraumabschnitt 11 und in einem zweiten Außenraumabschnitt 12 frei von Fäden 9 ist. Zwischen dem ersten Außenraumabschnitt 11 und dem zweiten Außenraumabschnitt 12 sind zwischen den Hohlfasermembranen 3 Fäden 9 angeordnet. Die Einbettung am ersten Ende 4 ist so ausgeführt, dass die Hohlfasermembranen durch die Vergussmasse 5 hindurchtreten, stirnseitig vor der Vergussmasse 5 offen sind und in die zwischen erster Vergussmasse 5 und erster Endkappe 13 ausgebildete erste Kammer 14 münden. An ihrem zweiten Ende 6 sind die Hohlfasermembranen 3 so in die zweite Vergussmasse 7 eingebettet, dass sie innerhalb der Vergussmasse 7 enden und durch die zweite Vergussmasse 7 verschlossen sind.

Die zweite Vergussmasse, die den Außenraum am zweiten Ende des Gehäuses abschließt, weist durchgehende Öffnungen 25 auf, über die eine Fluidverbindung zwischen dem Außenraum 8 und einer stirnseitig am zweiten Gehäuseende zwischen der Vergussmasse 7 und einer zweiten Endkappe 26 ausgebildeten zweiten Kammer 27 besteht. Die Öffnungen 25 in der Vergussmasse 7 können in Form von Bohrungen in der zweiten Vergussmasse vorliegen, es kann sich aber auch um Röhrchen handeln, die durch die zweite Vergussmasse 7 hindurchgehen und die zusammen mit den Hohlfasermembranen 3 in die zweite Vergussmasse 7 eingebettet sind.

Bei dieser in Figur 4 dargestellten Ausführungsform des erfindungsgemäßen Membranmoduls 24 kann beispielsweise ein Fluid über den ersten Anschlussstutzen 19 in den ersten Außenraumabschnitt 11 innerhalb des Gehäuses 2 eingeleitet und im Bereich des ersten Außenraumabschnitts 11 wegen des dort fehlenden Anteils an Fäden 9 zwischen den Hohlfasermembranen 3 gleichmäßig über den Querschnitt des Bündels der Hohlfasermembranen 3 verteilt werden. Anschließend kann es entlang der Hohlfasermembranen 3 in Richtung auf die zweite Vergussmasse 7 und in den vor der zweiten Vergussmasse 7 befindlichen zweiten Außenraumabschnitt 12 fließen. Aus dem zweiten Außenraumabschnitt 12 kann dann das Fluid über die Öffnungen 26 in der zweiten Vergussmasse 7 aus dem Außenraum 8 abgeleitet werden und den Membranmodul 24 über die zweite Kammer 27 und den zweiten Anschlussstutzen 28 in der zweiten Endkappe 26 verlassen. Alternativ kann die Einbettung 7 auch wie in Figur 3 ausgeführt sein und das Fluid den Aussenraumabschnitt 12 durch einen weiteren in den Außenraum 8 mündenden Anschlussstutzen verlassen.

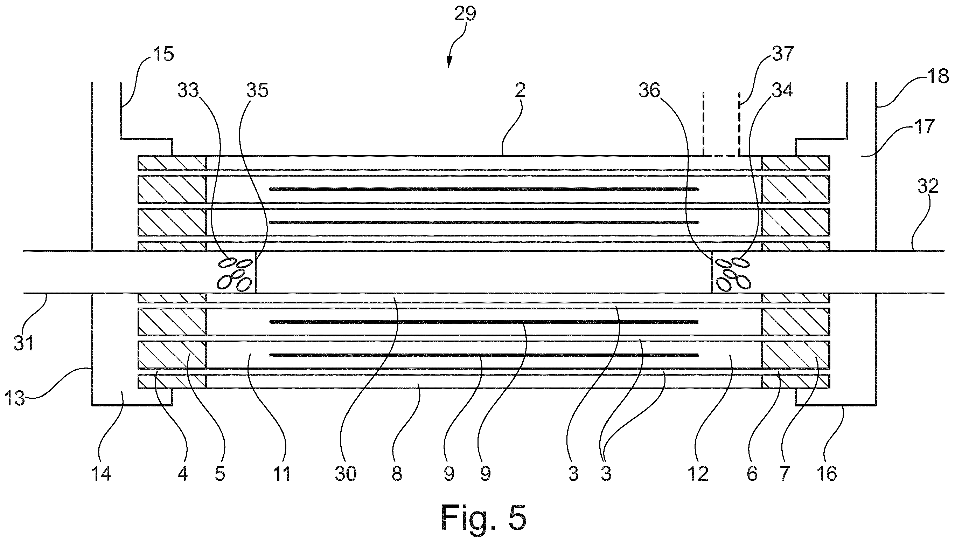

In Figur 5 ist ein Membranmodul 29 dargestellt, der ein Bündel von Hohlfasermembranen 3 enthält, das um ein Kernrohr 30 herum angeordnet ist. Das Kernrohr 30 ist zusammen mit den Hohlfasermembranen 3 in die erste Vergussmasse 5 und in die zweite Vergussmasse 7 eingebettet und führt durch die erste Vergussmasse 5 sowie durch die stirnseitig vor der ersten Vergussmasse 5 angeordnete erste Kammer 14 hindurch, wobei das Kernrohr 30 gegenüber der ersten Kammer 14 fluiddicht abgetrennt ist. Das Kernrohr 30 führt aus der ersten Kammer 14 in der ersten Endkappe 13 heraus und steht an seinem ersten Ende mit einem mit dem Kernrohr verbundenen ersten Anschlussstutzen 31 in Fluidverbindung. Am zweiten Ende des Gehäuses tritt das Kernrohr 30 durch die zweite Vergussmasse 7 hindurch, durchläuft die stirnseitig vor der zweiten Vergussmasse 7 ausgebildete zweite Kammer 17, wobei das Kernrohr 30 gegenüber der zweiten Kammer 14 fluiddicht abgetrennt ist, tritt durch die zweite Endkappe 16 hindurch und steht mit einem an der zweiten Endkappe 16 angebrachten und mit dem Kernrohr verbundenen zweiten Anschlussstutzen 32 in Fluidverbindung. Im Bereich des ersten Außenraumabschnitts 11, in dem das um das Kernrohr 30 angeordnete Bündel von Hohlfasermembranen 3 vorliegend frei von Fäden 9 ist, weist das Kernrohr 30 in seiner Wand Perforationen 33 auf, über die ein Fluid im Bereich der ersten Außenraumabschnitts 11 aus dem Kernrohr 30 in den Außenraum 8 bzw. den ersten Außenraumabschnitt 11 einströmen bzw. aus diesem in das Kernrohr 30 einströmen kann. Ebenso weist das Kernrohr 30 im Bereich des an die zweite Vergussmasse 7 angrenzenden zweiten Außenraumabschnitts 12 in seiner Wand Perforationen 34 auf, über die ein Fluid im Bereich der zweiten Außenraumabschnitts 12 aus dem Kernrohr 30 in den Außenraum 8 bzw. in den zweiten Außenraumabschnitt 12 einströmen oder aus diesen in das Kernrohr 30 ausströmen kann. Zwischen den Bereichen mit den Perforationen 33, 34 weist das Kernrohr Verschlüsse 35, 36 auf, um eine Durchströmung des Kernrohrs 30 von einem zum anderen Ende zu unterbinden. Anstelle der Verschlüsse 35, 36 kann das Kernrohr in seinem Bereich zwischen den Perforationen 33, 34 auch aus einem Vollmaterial bestehen.

Die Hohlfasermembranen 3 sind mit ihren Enden 4, 6 so in die Vergussmassen 5, 7 eingebettet, dass sie durch sie hindurchtreten und an ihren Enden gegenüber der ersten Kammer 14 und der zweiten Kammer 17 offen sind und ein Fluid durch sie hindurchströmen kann. Erste und zweite Endkappe 13, 16 weisen seitliche Anschlussöffnungen 15, 18 auf, über die ein Fluid in die erste Kammer 14 und die zweite Kammer 17 ein- oder ausströmen kann. Das Gehäuse 3 kann des Weiteren einen seitlichen Anschlussstutzen 37 aufweisen, beispielsweise um den Außenraum 8 um die Hohlfasermembranen 3 zu entlüften. In einer alternativen Ausführungsform, bei der das Kernrohr 30 zwar im Bereich des ersten Außenraumabschnitts 11 in seiner Wand Perforationen 33 aufweist, nicht jedoch im Bereich des zweiten Außenraumabschnitts 12, kann das erste Fluid über einen solchen seitlichen Anschlussstutzen 37 auch aus dem zweiten Außenraumabschnitt 12 bzw. aus dem Außenraum 8 abgezogen werden.

Bei einer Ausführungsform des Membranmoduls 29, wie in Figur 5 dargestellt, kann beispielsweise ein erstes Fluid über den ersten Anschlussstutzen 31 in das Kernrohr 30 einströmen und im Bereich des ersten Außenraumabschnitts 11, in dem die Umströmung der Hohlfasermembranen 3 wegen des Fehlens der Fäden 9 verbessert ist, über die Perforationen 33 in der Wand des Kernrohrs 30 in den ersten Außenraumabschnitt 11 einströmen und gleichmäßig über den Bündelquerschnitt verteilt werden. Anschließend kann das erste Fluid entlang der Hohlfasermembranen 3 den Außenraum 8 zwischen der ersten Vergussmasse 5 und der zweiten Vergussmasse 7 durchströmen. Dabei kann beispielsweise ein Transport eines Teils des ersten Fluids über die Wände der Hohlfasermembranen 3 in die Lumina der Hohlfasermembranen 3 erfolgen oder in Gegenrichtung bezogen auf das zweite Fluid. Der verbleibende Teil des ersten Fluids strömt im Bereich des zweiten Außenraumabschnitts 12, in dem ebenfalls keine Fäden 9 vorliegen, über die Perforationen 34 in der Wand des Kernrohrs 30 aus dem zweiten Außenraumabschnitt 12 in das Kernrohr 30 ein und strömt aus diesem über den mit dem Kernrohr verbundenen zweiten Anschlussstutzen 32 aus dem Membranmodul 29 aus.

Über die zweite Anschlussöffnung 18 in der stirnseitig vor dem zweiten Ende des Gehäuses 2 angeordneten zweiten Endkappe 16 kann dann beispielsweise ein zweites Fluid in die zwischen zweiter Endkappe 16 und zweiter Vergussmasse 7 ausgebildete zweite Kammer 17 eingeleitet werden. Von dort kann das zweite Fluid in die offenen Lumina der Hohlfasermembranen 3 einströmen und die Hohlfasermembranen 3 lumenseitig durchströmen, wobei es Komponenten des ersten Fluids aufnehmen oder Komponenten an dieses abgeben kann. Das so an- oder abgereicherte zweite Fluid verlässt die Hohlfasermembranen 3 an deren ersten Enden 4 und strömt in die stirnseitig vor der ersten Vergussmasse 5 angeordnete erste Kammer 14 ein. Aus dieser strömt das angereicherte zweite Fluid über die erste Anschlussöffnung 15 in der ersten Endkappe 13 aus dem Membranmodul 29 aus.

## Patentansprüche

1. Hohlfasermembranbündel mit einer Längserstreckung, einem Membranbündelquerschnitt und einem ersten und einem zweiten Bündelende, umfassend eine Vielzahl von sich zwischen dem ersten und dem zweiten Bündelende erstreckenden Hohlfasermembranen sowie auf den Membranbündelquerschnitt bezogen einen Anteil von zwischen den Hohlfasermembranen angeordneten Fäden, die die Hohlfasermembranen auf Abstand halten, **dadurch gekennzeichnet, dass** die Fäden kürzer als die Hohlfasermembranen sind, so dass mindestens am ersten Ende des Hohlfasermembranbündels Hohlfasermembranen gegenüber den Fäden überstehen und das Hohlfasermembranbündel in einem vom ersten Ende ausgehenden ersten Endbereich einen geringeren Anteil an Fäden aufweist als in einem zwischen dem ersten und dem zweiten Bündelende liegenden Bündelbereich mit maximalem Anteil an Fäden.

2. Hohlfasermembranbündel nach Anspruch 1, **dadurch gekennzeichnet, dass** die Hohlfasermembranen am ersten und am zweiten Ende des Hohlfasermembranbündels überstehen und das Hohlfasermembranbündel und das Hohlfasermembranbündel weist des Weiteren in einem vom zweiten Ende ausgehenden zweiten Endbereich einen geringeren Anteil an Fäden auf als in einem zwischen dem ersten und dem zweiten Bündelende liegenden Bündelbereich mit maximalem Anteil an Fäden.

3. Hohlfasermembranbündel nach einem oder mehreren der Ansprüche 1 bis 2, **dadurch gekennzeichnet, dass** die Länge des ersten und/oder die Länge des zweiten Endbereichs 1% bis 15 % der Bündellänge beträgt.

4. Hohlfasermembranbündel nach einem oder mehreren der Ansprüche 1 bis 2, **dadurch gekennzeichnet, dass** die Länge des Bündelbereichs mit maximalem Anteil an Fäden 10% bis 90 % der Bündellänge beträgt.

5. Hohlfasermembranbündel nach einem oder mehreren der Ansprüche 1 bis 4, **dadurch gekennzeichnet, dass** der Anteil der Fäden im ersten und/oder zweiten Endbereich gegenüber dem Anteil der Fäden im Bündelbereich mit maximalem Anteil an Fäden um mindestens 50 % verringert ist.

6. Hohlfasermembranbündel nach einem oder mehreren der Ansprüche 1 bis 5, **dadurch gekennzeichnet, dass** der erste und/oder zweite Endbereich frei von Beilegfäden ist.

7. Hohlfasermembranbündel nach einem oder mehreren der Ansprüche 1 bis 6, **dadurch gekennzeichnet, dass** es sich bei den Fäden um Monofilament- oder Multifilamentgarne handelt.

8. Hohlfasermembranbündel nach Anspruch 1, **dadurch gekennzeichnet, dass** die Fäden ein erstes und ein zweites Fadenende aufweisen und dass das erste und das zweite Fadenende dem ersten bzw. dem zweiten Bündelende zugewandt sind.

9. Hohlfasermembranbündel nach einem oder mehreren der Ansprüche 1 bis 8, **dadurch gekennzeichnet, dass** im mittleren Bündelbereich das auf den Membranbündelquerschnitt bezogene Verhältnis der Querschnittsfläche der Gesamtheit der Fäden zur Querschnittsfläche der Gesamtheit der Hohlfasermembranen in einem Bereich von 0,1 bis 10 % liegt.

10. Membranmodul mit einem zylinderförmigen Gehäuse mit einer Längserstreckung und einem ersten und einem zweiten Gehäuseende, einem sich zwischen dem ersten und dem zweiten Gehäuseende erstreckenden Gehäusemantel sowie einer Gehäuseinnenwand, wobei im Gehäuse ein in Richtung der Längserstreckung des Gehäuses orientiertes Hohlfasermembranbündel gemäß Anspruch 1 angeordnet ist.

11. Membranmodul nach Anspruch10, **dadurch gekennzeichnet, dass** die Hohlfasermembranen des Hohlfasermembranbündels zumindest mit ihrem dem ersten Bündelende zugeordneten Ende in eine am ersten Ende des Gehäuses angeordnete und mit der Gehäuseinnenwand fluiddicht verbundene erste Vergussmasse eingebettet sind und das Gehäuse im Bereich seines zweiten Endes durch einen Verschluss geschlossen ist,
- wobei durch die erste Vergussmasse, die Gehäuseinnenwand sowie den Verschluss im Bereich des zweite Endes des Gehäuses ein die Hohlfasermembranen umgebender und sich zwischen der ersten Vergussmasse und dem Verschluss im Bereich des zweiten Ende des Gehäuses erstreckender Außenraum ausgebildet ist,
- wobei die Hohlfasermembranen des Hohlfasermembranbündels am ersten Bündelende so in die erste Vergussmasse eingebettet sind, dass die Hohlfasermembranen durch die erste Vergussmasse hindurchtreten und am ersten Bündelende offen sind und mit einer am ersten Ende des Gehäuses stirnseitig angeordneten ersten Kammer in Fluidverbindung stehen,
- wobei die erste Kammer durch eine stirnseitig am ersten Gehäuseende angebrachte erste Endkappe abgeschlossen ist, und die erste Endkappe eine erste Anschlussöffnung zur Einleitung oder Ausleitung eines Fluid aufweist,
- wobei das erste Bündelende so in die erste Vergussmasse eingebettet ist, dass das Bündel entlang seiner Erstreckung im Außenraum in einem an die erste Vergussmasse angrenzenden ersten Außenraumabschnitt einen geringeren Anteil an Fäden aufweist als in einem an zwischen dem ersten und dem zweiten Bündelende liegenden mittleren Bündelbereich mit maximalem Anteil an Fäden und der erste Außenraumabschnitt in Erstreckungsrichtung des Bündels eine Länge von mindestens 5 mm aufweist und
- wobei der Membranmodul einen ersten Anschlussstutzen aufweist, über den im Bereich des ersten Außenraumabschnitts ein Fluid in den Außenraum eingeleitet bzw. aus dem Außenraum abgeleitet werden kann.

12. Membranmodul nach Anspruch 11, **dadurch gekennzeichnet, dass** die dem zweiten Ende des Gehäuses zugewandten Enden der Hohlfasermembranen geschlossen oder U-förmig ausgebildet sind und im Außenraum enden.

13. Membranmodul nach Anspruch 11, **dadurch gekennzeichnet, dass** die Hohlfasermembranen des Hohlfasermembranbündels des Weiteren mit ihrem dem zweiten Bündelende zugeordneten Ende in eine am zweiten Ende des Gehäuses angeordnete und mit der Gehäuseinnenwand fluiddicht verbundene zweite Vergussmasse eingebettet sind, die gleichzeitig den Verschluss des Gehäuses im Bereich seines zweiten Endes ausbildet.

14. Membranmodul nach Anspruch 13, **dadurch gekennzeichnet, dass** es sich bei dem Hohlfasermembranbündel um ein solches handelt, bei dem das Hohlfasermembranbündel des Weiteren in einem vom zweiten Ende ausgehenden zweiten Endbereich einen geringeren Anteil an Fäden aufweist als in einem an zwischen dem ersten und dem zweiten Bündelende liegenden Bündelbereich mit maximalem Anteil an Fäden, dass das zweite Bündelende so in die zweite Vergussmasse eingebettet ist, dass das Bündel entlang seiner Erstreckung im Außenraum in einem an die zweite Vergussmasse angrenzenden zweiten Außenraumabschnitt einen geringeren Anteil an Fäden aufweist als in einem an zwischen dem ersten und dem zweiten Bündelende liegenden Bündelbereich mit maximalem Anteil an Fäden und dass der zweite Außenraumabschnitt in Erstreckungsrichtung des Bündels eine Länge von mindestens 5 mm aufweist.

15. Membranmodul nach einem der Ansprüche 14, **dadurch gekennzeichnet, dass** die Hohlfasermembranen des Hohlfasermembranbündels am zweiten Bündelende so in die zweite Vergussmasse eingebettet sind, dass sie durch die zweite Vergussmasse hindurchtreten und ihre Lumina am zweiten Bündelende offen sind und mit einer stirnseitig vor dem zweiten Ende des Gehäuses angeordneten zweiten Kammer in Fluidverbindung stehen, und wobei die zweite Kammer durch eine zweite Endkappe, abgeschlossen ist, die eine zweite Anschlussöffnung zur Einleitung oder Ausleitung eines Fluid in bzw. aus der zweiten Kammer aufweist, und wobei das Gehäuse im Bereich seines zweiten Endes einen zweiten Anschlussstutzen zur Einleitung oder Ausleitung eines Fluid in den bzw. aus dem Außenraum aufweist.
